# EUROPÄISCHE PATENTANMELDUNG

(11) **EP 4 474 099 A1**
(43) Veröffentlichungstag der Anmeldung: **11.12.2024**
(21) Anmeldenummer: 24175626.1
(22) Anmeldetag: 14.05.2024
(51) Int. Cl.: B23Q 1/00

(54) **SPANNSTATION, GRUNDPLATTE UND VERTEILSCHEIBE**

(30) Priorität: 17.05.2023 DE 102023113086
(71) Anmelder: Heinz-Dieter Schunk GmbH & Co. Spanntechnik KG, 88512 Mengen (DE)
(72) Erfinder: Hanner, David, 72488 Sigmaringen (DE)
(74) Vertreter: DREISS Patentanwälte PartG mbB

(57) **Zusammenfassung**

Die Erfindung betrifft eine universell einsetzbare Spannstation zur Aufnahme von Spannvorrichtungen und zur Durchführung von Medien. Die Erfindung betrifft ferner eine Grundplatte und eine Verteilscheibe für eine solche Spannstation.

## Beschreibung

Die Erfindung betrifft eine universell einsetzbare Spannstation zur Aufnahme von Spannvorrichtungen und zur Durchführung von Medien. Die Erfindung betrifft ferner eine Grundplatte und eine Verteilscheibe für eine solche Spannstation.

Zum Spannen von Bauteilen in einer Bearbeitungsanlage kommen in der Regel mehrere Spannvorrichtungen gleichzeitig zum Einsatz. Die Spannvorrichtungen werden in einer Grundplatte einer Spannstation aufgenommen, wobei Medien für den Betrieb der Spannvorrichtungen durch die Grundplatte zu den verschiedenen Spannvorrichtungen geführt werden. Die Grundplatte ist dabei mit vier Schmalseiten und zwei Flachseiten ausgebildet, wobei die untere Flachseite auf der Bearbeitungsanlage aufliegt und die obere Flachseite die Spannvorrichtungen aufnimmt. Zudem ist die Grundplatte flach ausgebildet, wobei die Höhe der Grundplatte kleiner als die Breite und Länge der Grundplatte ausgebildet ist.

Zur Anbindung der Spannvorrichtungen an einer anlagenseitigen Medienzuführung sind in der Grundplatte Medienleitungen vorgesehen. Aufgrund der Mehrzahl von Spannvorrichtungen und Medienanschlüssen an den Spannvorrichtungen sind eine Vielzahl von Medienleitungen in der Grundplatte erforderlich. Die Medienleitungen werden in der Regel durch konventionelle Fertigungsverfahren, insbesondere durch Tieflochbohren, in die Schmalseiten der Grundplatte eingebracht, sodass die entlang der Flachseite zur Medienzuführung beabstandeten Spannvorrichtungen mit Medien versorgt werden können. Diese Herstellung von Medienleitungen in der Grundplatte sind nachteilig, da Tieflochbohrungen besonders anspruchsvoll sind und teures Werkzeug benötigen. Ferner bewirken derart in die Grundplatte eingebrachte Medienleitung ein komplexes Netz von Bereichen in der Grundplatte, welche nicht für weitere Funktionalität, wie z.B. die Befestigung der Spannvorrichtungen an der Grundplatte, nutzbar ist.

Aus der EP1250977A1 ist eine Mediendurchführeinheit und eine Schwenkeinheit mit einer Verteilerplatte bekannt. Aus der DE102018201853A1 ist eine Positioniervorrichtung zum Positionieren eines Werkstücks bekannt. Aus der US7210675B2 ist eine Haltevorrichtung mit einer hydraulischen Palette bekannt, welche eine hydraulische Platte, eine lösbare Oberplatte und Halteelemente umfasst.

Der vorliegenden Erfindung liegt daher die Aufgabe zugrunde, eine Spannstation bereitzustellen, welche einfach und kostengünstig herstellbar ist.

Die Aufgabe wird gelöst durch die Spannstation mit den Merkmalen des Anspruchs 1. Demnach weist die Spannstation wenigstens zwei Spannbaugruppen zum Spannen eines Bauteils auf, wobei jede Spannbaugruppe jeweils eine Spannvorrichtung, insbesondere ein Nullpunktspannmodul, aufweist. Zudem weist die Spannstation eine Grundplatte zur Befestigung der Spannstation an einer Bearbeitungsanlage auf. Die Grundplatte weist, insbesondere vier oder sechs, Modulaufnahmen zur Aufnahme der Spannbaugruppen, insbesondere der Spannvorrichtungen, auf. Ferner weist die Grundplatte wenigstens einen Medienanschluss zur Verbindung mit einer anlagenseitigen Medienzuführung auf. Der Medienanschluss und die Spannbaugruppen sind mittels Medienleitungen fluidisch miteinander verbunden. Die Medienleitungen umfassen unter anderem Verteilkanäle, welche an oder in einer zur Grundplatte separat ausgebildeten Verteilscheibe angeordnet sind. Die am Medienanschluss bereitgestellten Medien werden vorzugsweise durch die Verteilkanäle zu den Spannbaugruppen geleitet. Die jeweiligen Verteilkanäle sind vorzugsweise entlang der Medienleitungen zwischen der Medienzuführung und der jeweiligen Spannbaugruppe angeordnet.

Aufgrund der mehrteiligen Ausbildung der Spannstation kann das komplexe Netz der Medienleitungen teilweise bzw. der Verteilkanäle in der Verteilscheibe angeordnet werden. Die Verteilscheibe ist vorzugsweise derart ausgebildet, dass zum Einbringen der Verteilkanäle keine Tieflochbohrungen erforderlich sind. In dem Fall können einfachere und günstigere Verfahren verwendet werden.

Die Grundplatte weist vorzugsweise eine Höhe in einem Bereich zwischen 20 mm und 50 mm, insbesondere 25 mm und 45 mm, vorzugsweise 30 mm und 40 mm, bevorzugt 35 mm und 38 mm, auf. Die Grundplatte weist vorzugsweise eine Breite in einem Bereich zwischen 150 mm und 500 mm, insbesondere 170 mm und 450 mm, vorzugsweise 200 mm und 400 mm, auf. Die Grundplatte weist vorzugsweise eine Länge in einem Bereich zwischen 150 mm und 500 mm, insbesondere 170 mm und 450 mm, vorzugsweise 200 mm und 400 mm, auf. Die Grundplatte weist vorzugsweise Abmessungen von 170 mm x 170 mm x 20 mm (Länge x Breite x Höhe) oder Abmessungen von 200 mm x 200 mm x 30 mm oder Abmessungen von 450 mm x 450 mm 38 mm auf. Aufgrund der flachen Ausbildung der Grundplatte nimmt die Spannstation wenig Bauraum im Bearbeitungsraum der Bearbeitungsanlage ein.

Die Verteilscheibe ist vorzugsweise im Wesentlichen kreisrund ausgebildet und/oder weist zwei Flachseiten und eine Mantelseite auf. Die Verteilscheibe weist vorzugsweise einen Durchmesser in einem Bereich zwischen 100 mm und 300 mm, insbesondere 150 mm und 250 mm, vorzugsweise 170 mm und 230 mm, auf. Die Verteilscheibe weist vorzugsweise eine Höhe in einem Bereich zwischen 10 mm und 50 mm, insbesondere 20 mm und 40 mm, vorzugsweise 25 mm und 35 mm auf.

Die Verteilscheibe weist vorzugsweise in einer Scheibenmantelfläche der Verteilscheibe Scheibenausnehmungen zur teilweisen Aufnahme der neben angeordneten Spannvorrichtungen auf. Damit können bei gleichbleibender Abmessung der Grundplatte größere Verteilscheiben und/oder Spannvorrichtungen zum Einsatz kommen bzw. bei gleichbleibender Verteilscheibe und Spannvorrichtungen kann eine kleinere Grundplatte zum Einsatz kommen.

Vorzugsweise weist die Verteilscheibe einen zentrisch angeordneten, entlang der Spannachse verlaufenden Zentrierstift zum Zentrieren der Verteilscheibe in der Grundplatte auf.

Der Durchmesser der Verteilscheibe und die Länge und/oder Breite der Grundplatte weisen ein Verhältnis auf, welches insbesondere größer als 1:2, 1:3 oder 1:4 ist und/oder welches insbesondere kleiner als 1:10, 1:8 oder 1:6 ist.

Der Begriff "Tieflochbohrungen" im Sinne dieser Anmeldung sind Bohrungen mit einem Durchmesser und einer Tiefe, wobei die Tiefe wenigstens dreimal dem Durchmesser entspricht. Der Begriff "Nullpunktspannmodul" im Sinne dieser Anmeldung dienen zum wiederholgenauen Spannen eines Spannbolzens in einer definierten Position (Nullpunkt). Der Begriff "Bearbeitungsanlagen" im Sinne dieser Anmeldung sind z.B. mehrachsige NC-fähige Werkzeugmaschinen. Der Begriff "separat ausgebildet" im Sinne dieser Anmeldung bedeutet, dass zwei Bauteile nicht monolithisch miteinander verbunden sind bzw. zerstörungsfrei voneinander lösbar sind.

Die anlagenseitige Medienzuführung stellt vorzugsweise wenigstens eines der folgenden Medien bereit: ein Gas, wie Druckluft, eine Flüssigkeit, wie Öl, eine elektrische Spannung und/oder Daten am Medienanschluss der Grundplatte. Wenigstens eines der Medien wird vorzugsweise durch die Verteilscheibe zu den Spannbaugruppen geleitet.

Zudem umfassen die Medienleitungen an oder in der Grundplatte angeordnete erste Durchführungskanäle. Die Verteilscheibe, insbesondere die in der Verteilscheibe angeordneten Verteilkanäle, werden mittels der ersten Durchführungskanäle mit dem Medienanschluss fluidisch verbunden. Demnach werden die am Medienanschluss bereitgestellten Medien vorzugsweise zunächst durch die ersten Durchführungskanäle und dann durch die Verteilkanäle zu den Spannbaugruppen geleitet. Die ersten Durchführungskanäle sind vorzugsweise in wenigstens eine Flachseite der Grundplatte eingebracht. Im Vergleich zum Stand der Technik, in dem die Tieflochbohrungen im Wesentlichen waagegerecht bzw. parallel zu einer der Flachseiten ausgebildet sind, sind die ersten Durchführungskanäle vorzugsweise im Wesentlichen senkrecht zu einer Flachseite der Grundplatte eingebracht. Aufgrund der flachen Bauweise der Grundplatte sind die ersten Durchführungskanäle im Vergleich zu den im Stand der Technik erforderlichen Tieflochbohrungen in der Grundplatte kurz ausgebildet. Das geht mit dem Vorteil einer einfach und günstig herstellbaren Grundplatte einher. Der Begriff "im Wesentlichen senkrecht" entspricht einem Winkel zwischen einer der Flachseiten und des Kanals im Bereich zwischen 70° und 110°.

Vorteilhafterweise weisen die Medienleitungen ferner an oder in der Grundplatte angeordnete zweite Durchführungskanäle auf. Die Verteilscheibe und die Spannbaugruppe sind mittels der zweiten Durchführungskanäle fluidisch miteinander verbunden. Demnach sind die zweiten Durchführungskanäle entlang der Medienleitungen jeweils zwischen der Verteilscheibe und der Spannbaugruppe angeordnet. Demnach werden die am Medienanschluss bereitgestellten Medien vorzugsweise zunächst durch die ersten Durchführungskanäle, dann durch die Verteilkanäle und dann durch die zweiten Durchführungskanäle zu den Spannbaugruppen geleitet. Die zweiten Durchführungskanäle sind vorzugsweise in wenigstens eine Flachseite der Grundplatte eingebracht. Die zweiten Durchführungskanäle sind vorzugsweise im Wesentlichen senkrecht zu einer Flachseite der Grundplatte eingebracht. Aufgrund der flachen Bauweise der Grundplatte sind die zweiten Durchführungskanäle im Vergleich zu den im Stand der Technik erforderlichen Tieflochbohrungen in der Grundplatte kurz ausgebildet. Das geht mit dem Vorteil einer einfach und günstig herstellbaren Grundplatte einher.

Es ist vorteilhaft, wenn die ersten Durchführungskanäle unmittelbar an den Medienanschluss und/oder wenn die Verteilkanäle unmittelbar an die ersten Durchführungskanäle und/oder die zweiten Durchführungskanäle unmittelbar an die Verteilkanäle und/oder die Spannbaugruppe unmittelbar an die zweiten Durchführungsleitungen anschließen.

Eine vorteilhafte Weiterbildung sieht vor, dass die Spannstation ferner einen zur Grundplatte und/oder zur Verteilscheibe separat ausgebildeten Maschinenadapter aufweist, wobei der Medienanschluss am oder im Maschinenadapter angeordnet ist. Demnach kann ein auf die Bearbeitungsanlage individuell angepasster Medienanschluss bereitgestellt werden, sodass die Spannstation auf unterschiedlichen Bearbeitungsanlagen zum Einsatz kommen kann. Der Maschinenadapter weist ferner vorzugsweise einen Zentrierbolzen zum lagegenauen Anordnen der Spannstation an oder in der Bearbeitungsanlage auf. Der Zentrierbolzen verläuft vorzugweise entlang einer Spannachse, wobei die Spannachse vorzugweise senkrecht zu einer Flachseite der Grundplatte verläuft. Die Grundplatte weist vorzugsweise eine erste Adapteraufnahme zur Aufnahme des Maschinenadapters in der Spannstation auf, wobei diese insbesondere an einer Plattenunterseite der Grundplatte vorgesehen ist.

Vorteilhafterweise weist die Spannbaugruppe neben der Spannvorrichtung einen zur Spannvorrichtung und/oder zur Grundplatte separat ausgebildeten Spannadapter auf. Der Spannadapter dient zur Anbindung der Spannvorrichtung an die Spannstation. Demnach können Spannvorrichtungen mit unterschiedlichen Leitungs- und Befestigungsprofilen an der Spannstation verwendet werden. Die Spannvorrichtungen müssen nicht an die Spannstation angepasst werden und vice versa. Die Grundplatte weist vorzugweise wenigstens eine zweite Adapteraufnahme zur Aufnahme je eines Spannadapters auf, wobei die wenigstens eine zweite Adapteraufnahme an der Plattenunterseite der Grundplatte angeordnet. Es ist vorteilhaft, wenn die wenigstens zweite Adapteraufnahme entlang der Flachseite zur ersten Adapteraufnahme beabstandet ausgebildet ist.

Es ist vorteilhaft, wenn die Medienleitungen ferner am oder im Spannadapter angeordnete Adapterkanäle umfassen. Die Verteilscheibe, insbesondere die Verteilkanäle der Verteilscheibe, und die Spannvorrichtung sind vorzugsweise jeweils mittels der Adapterkanäle fluidisch miteinander verbunden. Demnach sind die Adapterkanäle entlang der Medienleitungen jeweils zwischen der Verteilscheibe und der Spannvorrichtung angeordnet. So werden die am Medienanschluss bereitgestellten Medien vorzugsweise zunächst durch die ersten Durchführungskanäle, dann durch die Verteilkanäle, dann durch die zweiten Durchführungskanäle und dann durch die Adapterkanäle zu der Spannvorrichtung geleitet.

Eine vorteilhafte Weiterbildung sieht vor, dass die Medienleitungen ferner am oder in der Grundplatte angeordnete dritte Durchführungskanäle umfasst. Der Spannadapter, insbesondere die Adapterkanäle, und die Spannvorrichtung sind vorzugsweise mittels der dritten Durchführungskanäle miteinander fluidisch verbunden. Demnach sind die dritten Durchführungskanäle entlang der Medienleitungen jeweils zwischen dem Spannadapter und der Spannvorrichtung angeordnet. Demnach werden die am Medienanschluss bereitgestellten Medien vorzugsweise zunächst durch die ersten Durchführungskanäle, dann durch die Verteilkanäle, dann durch die zweiten Durchführungskanäle, dann durch die Adapterkanäle und dann durch die dritten Durchführungskanäle zu den Spannvorrichtung geleitet. Die dritten Durchführungskanäle sind vorzugsweise in wenigstens eine Flachseite der Grundplatte eingebracht. Die dritten Durchführungskanäle sind vorzugsweise im Wesentlichen senkrecht zu einer Flachseite der Grundplatte eingebracht. Aufgrund der flachen Bauweise der Grundplatte sind die dritten Durchführungskanäle im Vergleich zu den im Stand der Technik erforderlichen Tieflochbohrungen in der Grundplatte kurz ausgebildet. Das geht mit dem Vorteil einer einfach und günstig herstellbaren Grundplatte einher.

Eine vorteilhafte Weiterbildung sieht vor, dass die Verteilkanäle zumindest teilweise an einer Scheibenunterseite der Verteilscheibe vorgesehen sind. Die Scheibenunterseite ist im montierten Zustand der Grundplatte zugewandt.

Ferner ist es vorteilhaft, wenn die Verteilkanäle zumindest teilweise durch die Scheibenunterseite der Verteilscheibe und durch eine Plattenoberseite begrenzt werden.

Vorteilhafterweise weist jeder Verteilkanal einen zumindest teilweise entlang eines Rings, insbesondere Kreisrings, verlaufenden ersten Verteilkanalabschnitt auf. Der erste Verteilkanalabschnitt ist vorzugweise konzentrisch zum Zentrierstift ausgebildet. Die Verteilkanalabschnitte verlaufen jeweils vorzugsweise zumindest entlang eines Rings, wobei jeder Ring bzw. jeder Verteilkanalabschnitt einen unterschiedlichen Verteildurchmesser aufweist.

Eine vorteilhafte Weiterentwicklung sieht vor, dass zwischen zwei radial benachbarten ersten Verteilkanalabschnitten ein ringförmiges, insbesondere kreisringförmiges, Dichtmittel, insbesondere ein Dichtring, zum fluidischen Trennen der benachbarten ersten Verteilkanalabschnitte angeordnet ist.

Es ist vorteilhaft, wenn die Spannstation derart ausgebildet ist, dass eine Scheibenoberseite der Verteilscheibe bündig oder tiefer als eine Spannoberseite der Spannvorrichtung angeordnet ist. Der Begriff "tiefer" im Sinne der Anmeldung bedeutet, dass die Scheibenoberseite näher zur Plattenoberseite angeordnet ist als die Spannoberseite. Demnach können Bauteile bzw. Bauteilträger mit den Spannvorrichtungen gespannt werden, ohne dass die zusätzliche Verteilscheibe das gespannte Bauteil bzw. den gespannten Bauteilträger kontaktiert.

Eine weitere Ausführungsform der Spannstation sieht vor, dass eine maschinenseitige Medienversorgung direkt an der Grundplatte oder direkt an der Verbundscheibe angeschlossen ist. Die Verteilscheibe verteilt in dem Fall die bereitgestellten Medien an die Spannvorrichtungen.

Eine weitere Ausführungsform der Spannstation sieht vor, dass eine maschinenseitige Medienversorgung an einem Anlagenadapter angeordnet ist, wobei die am Anlagenadapter bereitgestellten Medien an die Spannvorrichtungen mittels der Verteilscheibe verteilt werden.

Eine weitere Ausführungsform der Spannstation sieht vor, dass eine maschinenseitige Medienversorgung an einem Anlagenadapter angeordnet ist, wobei die am Anlagenadapter bereitgestellten Medien an die Spannvorrichtungen mittels der Verteilscheibe und dem jeweiligen Spannadapter verteilt werden.

Die der Erfindung zugrundeliegende Aufgabe wird ebenfalls durch eine Grundplatte mit den Merkmalen des Anspruchs 13 gelöst. Die Grundplatte dient zur Anordnung und/oder Verwendung in einer Spannstation. Die Grundplatte ist vorzugsweise flach ausgebildet. Die Grundplatte weist eine entlang einer Plattenebene verlaufende Plattenoberseite und eine der Plattenoberseite gegenüberliegende, parallel zur Plattenebene verlaufende Plattenunterseite auf. Ferner weist die Grundplatte an oder in der Plattenoberseite vorgesehene Modulaufnahmen zur Aufnahme von Spannvorrichtungen auf. Ferner weist die Grundplatte eine an oder in der Plattenoberseite vorgesehene Scheibenaufnahme zur Aufnahme einer Verteilscheibe auf. Ferner weist die Grundplatte eine an oder in der Plattenunterseite vorgesehene Adapteraufnahme zur Aufnahme eines Maschinenadapters auf. Die Grundplatte weist zudem im Wesentlichen senkrecht zur Plattenebene verlaufende erste und zweite Durchführungskanäle auf, wobei die Durchführungskanäle einen Winkel zur Plattenebene von 70° und 110° aufweisen. Die Adapteraufnahme und die Scheibenaufnahme sind mittels der ersten Durchführungskanäle fluidisch miteinander verbunden. Die Scheibenaufnahme und die Modulaufnahmen sind jeweils mittels der zweiten Durchführungskanäle fluidisch miteinander verbunden sind.

Die Grundplatte ist vorzugsweise tieflochbohrungsfrei ausgebildet. Somit weist die Grundplatte zur fluidischen Verbindung der Scheibenaufnahme mit der Modulaufnahme und/oder der Adapteraufnahme nur im Vergleich zu Tieflochbohrungen kurze Bohrungen auf. Dies wird insbesondere durch die ausschließlich vertikale Anordnung der Durchführungskanäle erzielt.

Die der Erfindung zugrundeliegende Aufgabe wird ebenfalls durch eine Verteilscheibe mit den Merkmalen des Anspruchs 14 gelöst. Die Verteilscheibe dient zur Anordnung und/oder Verwendung an einer Spannstation. Die Verteilscheibe weist eine entlang einer Scheibenebene verlaufende Scheibenoberseite, eine der Scheibenoberseite gegenüberliegende, parallel zur Scheibenebene verlaufende Scheibenunterseite sowie eine zwischen der Scheibenoberseite und der Scheibenunterseite angeordnete Scheibenmantelseite auf. Die Verteilscheibe weist Verteilkanäle zum Durchführung bzw. Verteilen von Medien mit einem ersten Verteilkanalabschnitt, einem zweiten Verteilkanalabschnitt, einem dritten Verteilkanalabschnitt und einem vierten Verteilkanalabschnitt auf. Die ersten Verteilkanalabschnitte sind an der Scheibenunterseite der Verteilscheibe vorgesehen und zumindest teilweise entlang eines Rings, insbesondere eines parallel zur Scheibenebene verlaufenden Kreisrings, verlaufend angeordnet. Die zweiten und vierten Verteilkanalabschnitte sind senkrecht zur Scheibenebene verlaufend angeordnet und verlaufen im Inneren der Verteilscheibe. Die dritten Verteilkanalabschnitte sind zwischen der Scheibenoberseite und der Scheibenunterseite angeordnet und verlaufen parallel zur Scheibenebene.

Weitere Einzelheiten und vorteilhafte Ausgestaltungen der Erfindung sind der nachfolgenden Beschreibung zu entnehmen, anhand derer Ausführungsbeispiele der Erfindung weiter beschrieben und erläutert sind.

Es zeigen:
- Fig. 1: eine aus dem Stand der Technik bekannte Spannstation;
- Fig. 2: eine weitere aus dem Stand der Technik bekannte Spannstation;
- Fig. 3: eine Oberansicht einer erfindungsgemäßen Spannstation mit vier Spannmodulen und einer Verteilscheibe;
- Fig. 4: eine Unteransicht der Spannstation gemäß Fig. 3 mit vier Spannadaptern und einem Maschinenadapter;
- Fig. 5: eine Oberansicht einer erfindungsgemäßen Grundplatte mit vier Spannaufnahmen und einer Scheibenaufnahme;
- Fig. 6: eine Unteransicht der Grundplatte gemäß Fig. 5 mit einer ersten Adapteraufnahme und vier zweiten Adapteraufnahmen;
- Fig. 7: eine Oberansicht der Grundplatte gemäß Fig. 5 mit dargestellten innenliegenden Durchführungskanälen;
- Fig. 8: eine Oberansicht einer erfindungsgemäßen Verteilscheibe;
- Fig. 9: eine Unteransicht der Verteilscheibe gemäß Fig. 8;
- Fig. 10: eine Oberansicht der Verteilscheibe gemäß Fig. 8 mit dargestellten innenliegenden Verteilkanälen;
- Fig. 11: eine Oberansicht eines Spannadapters;
- Fig. 12: eine Unteransicht des Spannadapters gemäß Fig. 11;
- Fig. 13: eine Oberansicht des Spannadapters gemäß Fig. 11 mit dargestellten innenliegenden Adapterkanälen;
- Fig. 14: eine Schnittansicht eines ersten Teils der Spannstation gemäß Fig. 3;
- Fig. 15: eine Schnittansicht eines zweiten Teils der Spannstation gemäß Fig. 3;
- Fig. 16: eine Schnittansicht eines dritten Teils der Spannstation gemäß Fig. 3;
- Fig. 17: eine Seitenansicht eines vierten Teils der Spannstation gemäß Fig. 3; und
- Fig. 18: eine Detailansicht einer verschlossenen Medienleitung.

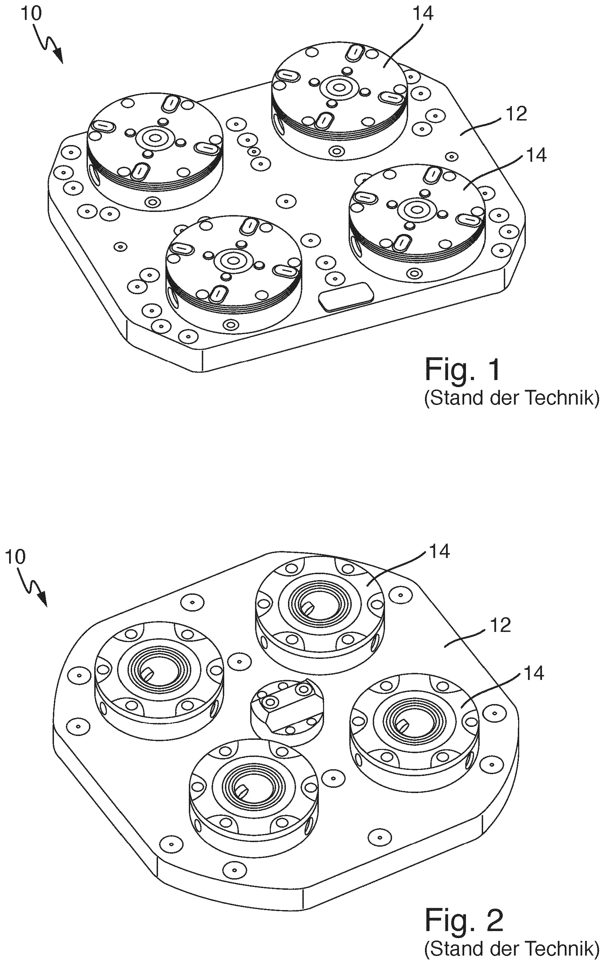

Die in den Fig. 1 und 2 gezeigten und aus dem Stand der Technik bekannten Spannstationen 10 offenbaren eine Grundplatte 12 zur Anordnung der Spannstation 10 an einer nicht gezeigten Bearbeitungsanlage, jeweils vier als Nullpunktspannmodule ausgebildete Spannvorrichtungen 14. Aus den Fig. 1 und 2 wird deutlich, dass je nach Ausbildung und Aufbau der Spannvorrichtungen 14 unterschiedliche Grundplatten 12 erforderlich sind.

Die nachfolgende Beschreibung bezieht sich auf die erfindungsgemäßen Ausführungsformen, wobei für die aus dem Stand der Technik bekannten Bauteile dieselben Bezugszeichen Verwendung finden.

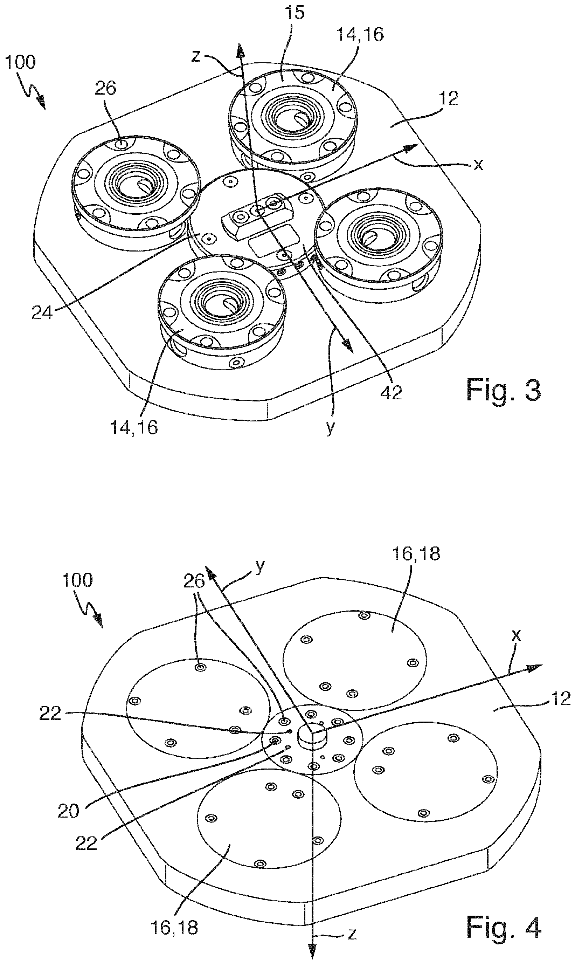

Die erfindungsgemäße Spannstation 100 umfasst gemäß Fig. 3 und 4 eine Grundplatte 12 mit vier Spannbaugruppen 16, wobei jede Spannbaugruppe 16 eine als Nullpunktspannmodul ausgebildete Spannvorrichtung 14 und einen Spannadapter 18 umfasst. Die Spannstation 100 umfasst ferner einen Maschinenadapter 20 mit einem Medienanschluss 22 zur Verbindung mit einer nicht dargestellten anlagenseitigen Medienzuführung. Die Spannvorrichtungen 14 und der Medienanschluss 22 sind fluidisch mittels Medienleitungen 23 miteinander verbunden. Zum Verbinden des Medienanschlusses 22 mit den Spannvorrichtungen 14 ist unter anderem eine Verteilscheibe 24 vorgesehen, wobei die Medienleitungen 23 unter anderem an und durch die Verteilscheibe 24 verlaufen.

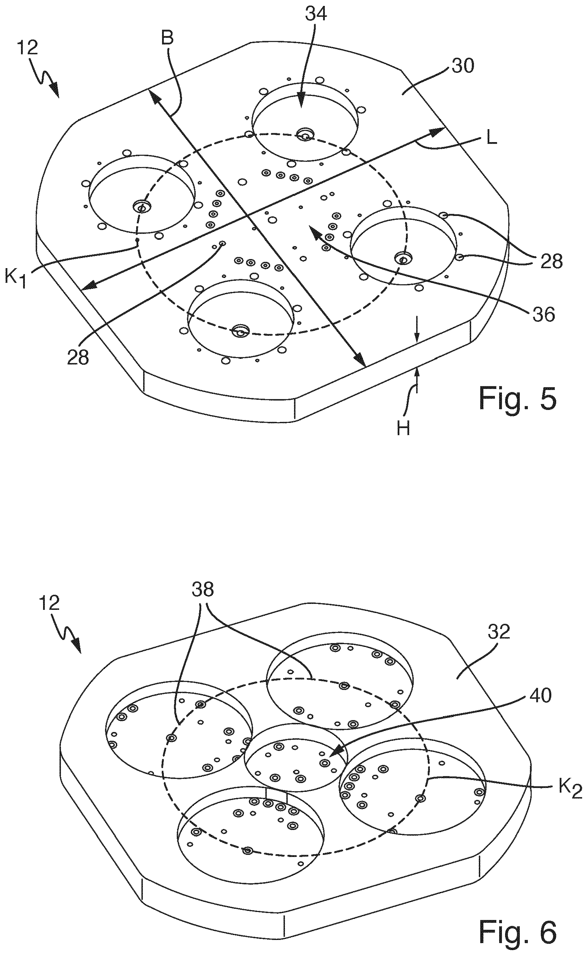

Die Grundplatte 12 ist gemäß Fig. 5 bis 7 flach ausgebildet, wobei die entlang einer X-Achse verlaufende Länge L und die entlang einer Y-Achse verlaufende Breite B um ein Vielfaches, insbesondere das Zehnfache, größer als die entlang einer Z-verlaufende Höhe H der Grundplatte 12 ausgebildet ist.

Die Spannvorrichtungen 14, die Spannadapter 18, der Maschinenadapter 20 und/oder die Verteilscheibe 24 sind mittels Befestigungsmittel 26, insbesondere Schrauben, an der Grundplatte 12 lösbar angeordnet. Dazu weist die Grundplatte 12 Befestigungsaufnahmen 28, insbesondere Gewindebohrungen, auf. Die Befestigungsmittel können vorzugsweise mit Abdeckungen abgedeckt werden.

Die Grundplatte 12 weist gemäß Fig. 5 eine senkrecht zur Z-Achse verlaufende Plattenoberseite 30 und gemäß Fig. 6 eine senkrecht zur Z-Achse verlaufende sowie der Plattenoberseite 30 gegenüberliegende Plattenunterseite 32 auf, wobei die Plattenunterseite 32 auf der Bearbeitungsanlage aufliegt und die Plattenoberseite 30 dem zu spannenden Werkstück zugewandt ist.

Die Grundplatte 12 weist an der Plattenoberseite 30 vier Modulaufnahmen 34 zur Aufnahme der Spannvorrichtungen 14 auf, wobei die Modulaufnahmen 34 entlang der X- und Y-Achse beabstandet zueinander angeordnet sind. Die Modulaufnahmen 34 sind entlang eines um die Z-Achse verlaufenden ersten Kreisrings K₁ angeordnet. Die Modulaufnahmen 34 sind vorzugsweise als in der Grundplatte 12 entlang der Z-Achse gegenüber der Plattenoberseite 30 zurückversetzte, insbesondere kreisrunde, Ausnehmungen ausgebildet. Ferner ist an der Plattenoberseite 30 eine Scheibenaufnahme 36 zur Aufnahme der Verteilscheibe 24 vorgesehen. Die Scheibenaufnahme 36 ist konzentrisch zur Z-Achse in der Grundplatte 12 angeordnet. Die Scheibenaufnahme 36 ist bündig mit der Plattenoberseite 30 ausgebildet. Es ist auch denkbar, dass die Modulaufnahmen 34 bündig mit der Plattenoberseite 30 ausgebildet sind und/oder die Scheibenaufnahme 36 durch eine zurückversetzte Ausnehmung gebildet ist.

Die Grundplatte 12 weist an der Plattenunterseite 32 vier erste Adapteraufnahmen 38 zur Aufnahme der Spannadapter 18 auf, wobei die ersten Adapteraufnahmen 38 entlang der X- und Y-Achse beabstandet zueinander angeordnet sind. Die ersten Adapteraufnahmen 38 sind entlang eines um die Z-Achse verlaufenden zweiten Kreisrings K₂ angeordnet. Die ersten Adapteraufnahmen 38 sind vorzugsweise als in der Grundplatte 12 entlang der Z-Achse gegenüber der Plattenunterseite 32 zurückversetzte, insbesondere kreisrunde, Ausnehmungen ausgebildet. Ferner ist an der Plattenunterseite 32 eine zweite Adapteraufnahme 40 zur Aufnahme des Maschinenadapters 20 vorgesehen. Die zweite Adapteraufnahme 40 ist konzentrisch zur Z-Achse in der Grundplatte 12 angeordnet. Die zweite Adapteraufnahme 40 ist vorzugsweise als in der Grundplatte 12 entlang der Z-Achse gegenüber der Plattenunterseite 32 zurückversetzte, insbesondere kreisrunde, Ausnehmung ausgebildet. Es ist auch denkbar, dass die ersten Adapteraufnahmen 38 und die zweite Adapteraufnahme 40 durch eine zurückversetzte Ausnehmung gebildet ist.

Im Betrieb stehen die Spannvorrichtungen 14 und die Verteilscheibe 24 gegenüber der Plattenoberseite 30 hervor, wobei eine Spannoberseite 15 der Spannvorrichtungen 14 gegenüber der Verteilscheibe 24 hervorsteht. Ferner sind die Spannadapter 18 im Betrieb bündig zur Plattenunterseite 32 ausgebildet.

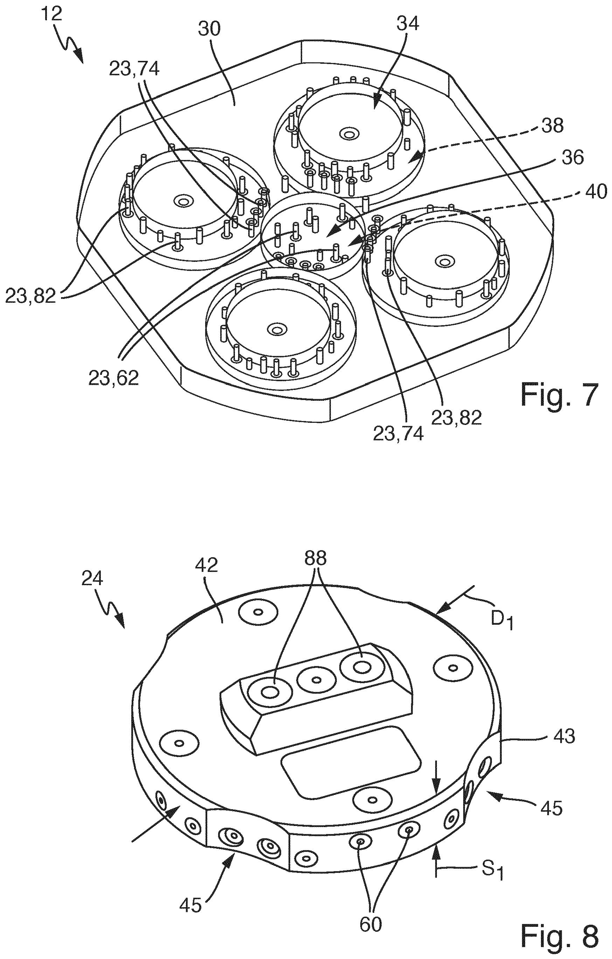

Die Verteilscheibe 24 ist gemäß der Fig. 8 bis 10 im Wesentlichen kreisrund ausgebildet. Die Verteilscheibe 24 ist flach ausgebildet, wobei der erste Durchmesser D₁ der Verteilscheibe 24 um ein Vielfaches, insbesondere das Fünffache, größer als die entlang der Z-Achse verlaufende erste Höhe S₁ der Verteilscheibe 24 ausgebildet ist.

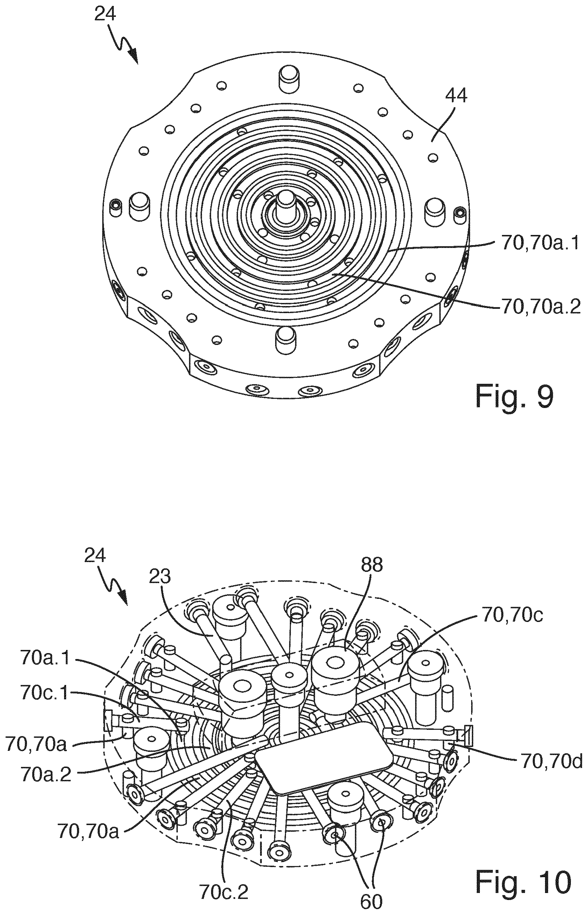

Die Verteilscheibe 24 weist gemäß Fig. 8 eine senkrecht zur Z-Achse verlaufende Scheibenoberseite 42 und gemäß Fig. 9 eine senkrecht zur Z-Achse verlaufende sowie der Scheibenoberseite 42 gegenüberliegende Scheibenunterseite 44 auf, wobei die Scheibenunterseite 44 im Betrieb der Grundplatte 12 zugewandt ist. Die Verteilscheibe 24 weist eine zwischen der Scheibenoberseite 42 und der Scheibenunterseite 44 angeordnete Scheibenmantelseite 43 auf, wobei in der Scheibenmantelseite 43 Scheibenausnehmungen 45 zur teilweisen Aufnahme der neben angeordneten Spannvorrichtungen 14 vorgesehen sind. Damit können die Verteilscheibe 24 und die Spannvorrichtungen 14 näher aneinander angeordnet werden und bei gleichbleibender Grundplatte 12 größer im Durchmesser ausgebildet sein.

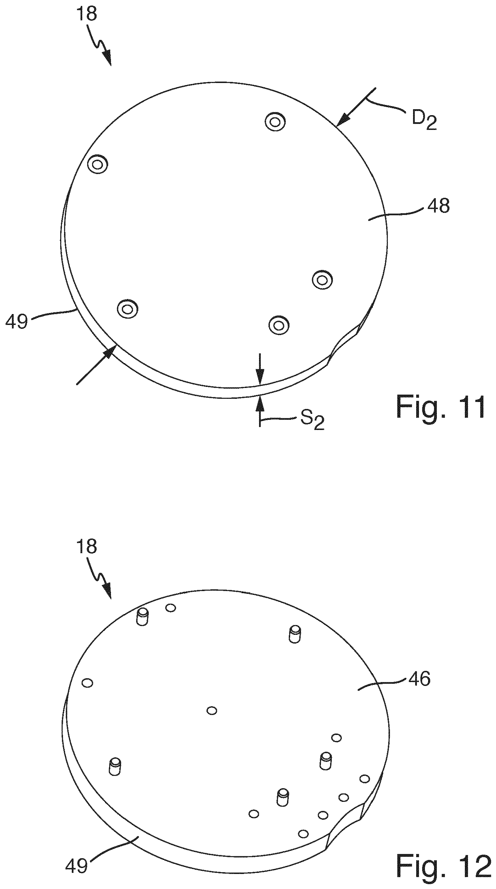

Der Spannadapter 18 ist gemäß der Fig. 11 bis 13 im Wesentlichen kreisrund ausgebildet. Der Spannadapter 18 ist flach ausgebildet, wobei der zweite Durchmesser D₂ des Spannadapters 18 um ein Vielfaches, insbesondere das Fünffache, größer als die entlang der Z-Achse verlaufende zweite Höhe S₂ des Spannadapters 18 ausgebildet ist.

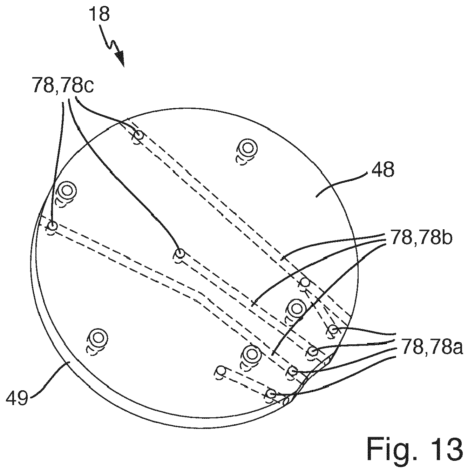

Der Spannadapter 18 weist gemäß Fig. 12 und 13 eine senkrecht zur Z-Achse verlaufende Adapteroberseite 46 und gemäß Fig. 11 eine senkrecht zur Z-Achse verlaufende sowie der Adapteroberseite 46 gegenüberliegende Adapterunterseite 48 auf, wobei die Adapteroberseite 46 im Betrieb der Grundplatte 12 zugewandt ist. Der Spannadapter 18 weist eine zwischen der Adapteroberseite 46 und der Adapterunterseite 48 angeordnete Adaptermantelseite 49 auf.

Der Maschinenadapter 20 ist im Betrieb bündig zur Plattenunterseite 32 ausgebildet. Der Maschinenadapter 20 weist vorzugsweise einen zur anlagenseitigen Medienzuführung gerichteten Zentrierbolzen 50 auf. Der Zentrierbolzen 50 dient zur Anordnung und zur Zentrierung der Spannstation 100 an die Bearbeitungsanlage. Der Zentrierbolzen 50 steht vorzugsweise gegenüber der Plattenunterseite 32 nach unten hervor. Der Medienanschluss 22 kann im Zentrierbolzen 50 angeordnet sein.

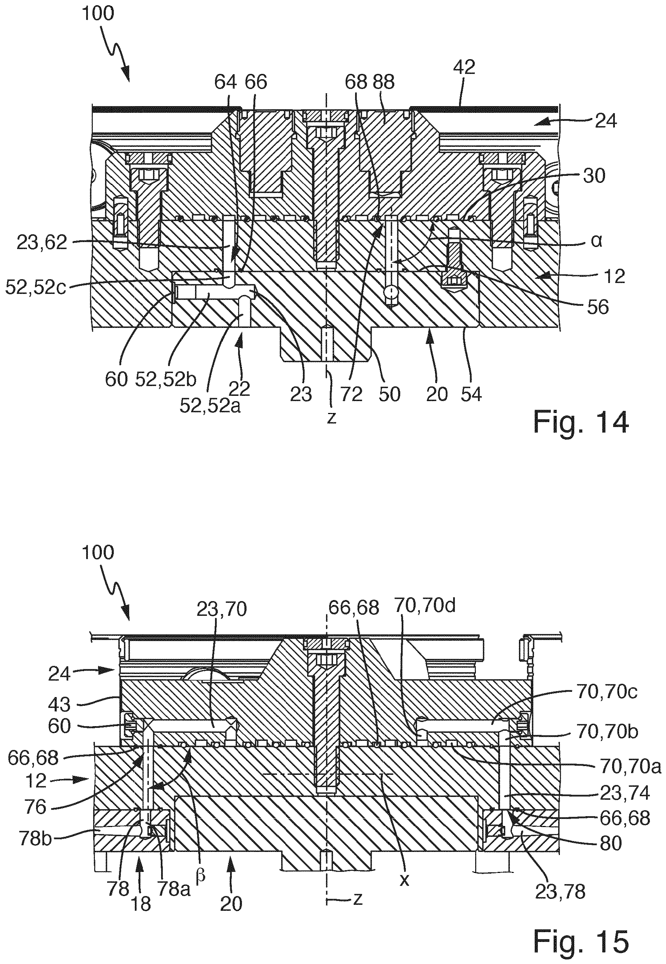

Die Ausbildung der Medienleitungen 23 und der Verlauf der durch die anlagenseitige Medienzuführung bereitgestellten Medien, insbesondere Druckluft, durch die Spannstation 100 wird insbesondere anhand der Fig. 14 bis 16 ersichtlich. Die Medienleitungen 23 verbinden den Medienanschluss 22 und die jeweiligen Spannvorrichtungen 14 fluidisch miteinander.

Die Medien strömen im Betrieb vom Medienanschluss 22 durch die Grundplatte 12 zur Verteilscheibe 24. Die Medien strömen im Betrieb weiter von der Verteilscheibe 24 durch die Grundplatte 12 zu den Spannadaptern 18. Die Medien strömen im Betrieb ferner weiter von den Spannadaptern 18 durch die Grundplatte 12 zu den Spannvorrichtungen 14.

Die Verteilscheibe 24 teilt jeweils eine eingehende Medienleitung 23 in mehrere ausgehende Medienleitungen 23 auf. Somit wird ein in einer Medienleitung 23 bereitgestelltes Medium an alle Spannvorrichtungen 24 verteilt. Falls mehrere Medien in mehreren unterschiedlichen eingehenden Medienleitungen 23 bereitgestellt werden, wird jede eingehende Medienleitung 23 in der Verteilscheibe 24 in mehrere ausgehende Medienleitungen 23 geteilt.

Dazu weisen die Medienleitungen 23 über die Spannstation 100 hinweg verteilte Kanalabschnitte auf.

Wie in Fig. 14 ersichtlich ist, weist der Maschinenadapter 20 Eingangskanäle 52 auf, welche von einer Unterseite 54 des Maschinenadapters 20 durch den Maschinenadapter 20 zur Oberseite 56 des Maschinenadapters 20 verlaufen. Die Eingangskanäle 52 werden jeweils durch einen parallel zur Z-Achse (nachfolgend als "vertikal" bezeichnet) verlaufenden ersten Eingangskanalabschnitt 52a, einen senkrecht zur Z-Achse verlaufenden (nachfolgend als "horizontal" bezeichnet) zweiten Eingangskanalabschnitt 52b und einen vertikal verlaufenden dritten Eingangskanalabschnitt 52c gebildet. Der erste Eingangskanalabschnitt 52a mündet unterseitig und der dritte Eingangskanalabschnitt 52c mündet oberseitig in den zweiten Eingangskanalabschnitt 52b. Der zweite Eingangskanalabschnitt 52b ist in eine Mantelseite 58 des Maschinenadapters 20 eingebracht und an der Mantelseite 58 des Maschinenadapters 20 mit einem Verschlusselement 60, insbesondere ein Pfropfen, verschlossen.

Wie ferner in Fig. 14 ersichtlich ist, weißt die Grundplatte 12 vertikal verlaufende erste Durchführungskanäle 62 auf. Die ersten Durchführungskanäle 62 schließen mit der Plattenoberseite 30 einen ersten Winkel α zwischen 70° und 110°, insbesondere zwischen 80° und 100°, bevorzugt zwischen 85° und 95°, ein. Die ersten Durchführungskanäle 62 sind im Bereich des Maschinenadapters 20 und/oder der Verteilscheibe 14 vorgesehen. Die ersten Durchführungskanäle 62 schließen an die Eingangskanäle 52, insbesondere an den dritten Eingangskanalabschnitt 52c, an. Zur Dichtung der ersten

Übergabestelle 64 zwischen dem Eingangskanal 52 und dem ersten Durchführungskanal 62 gegenüber der restlichen Spannstation 100 ist jeweils ein die erste Übergabestelle 64 umgebendes Dichtelement 66, insbesondere Dichtring, vorgesehen. Das Dichtelement 66 kann in einer Dichtmittelausnehmung 68 am Maschinenadapter 20 und/oder an der Grundplatte 12 vorgesehen sein. Der Medienanschluss 22 und die Verteilscheibe 24 sind mittels der Eingangskanäle 52 und der ersten Durchführungskanäle 62 fluidisch miteinander verbunden.

Nach Fig. 10 und 15 weist die Verteilscheibe 24 Verteilkanäle 70 auf. Die Verteilkanäle 70 werden jeweils durch einen horizontal verlaufenden ersten Verteilkanalabschnitt 70a, einen vertikal verlaufenden zweiten Verteilkanalabschnitt 70b, einen horizontal verlaufenden dritten Verteilkanalabschnitt 70c und einen vertikal verlaufenden vierten Verteilkanalabschnitt 70d gebildet. Der erste Verteilkanalabschnitt 70a ist an der Scheibenunterseite 44 angeordnet. Der zweite Verteilkanalabschnitt 70b mündet in dem ersten Verteilkanalabschnitt 70a und dem dritten Verteilkanalabschnitt 70c. Ferner mündet der vierte Verteilkanalabschnitt 70d in dem dritten Verteilkanalabschnitt 70c. Die dritten Verteilkanalabschnitt 70c sind von der Scheibenmantelseite 43 in die Verteilscheibe 24 eingebracht und mittels eines Verschlusselements 60 verschlossen.

In Fig. 9 sind die Scheibenunterseite 44 und die ersten Verteilkanalabschnitte 70a sichtbar. Die ersten Verteilkanalabschnitte 70a sind jeweils entlang eines Kreisrings ausgebildet, wobei jeder erste Verteilkanalabschnitt 70a einen anderen Verteildurchmesser D3 aufweist.

Der erste Verteilkanalabschnitt 70a und der erste Durchführungskanal 62 bilden eine zweite Übergabestelle 72. Zur Dichtung der zweiten Übergabestelle 72 gegenüber der restlichen Spannstation 100 ist jeweils wenigstens ein die zweite Übergabestelle 72 umgebendes Dichtelement 66, insbesondere ein um die Z-Achse angeordneter Dichtring, vorgesehen. Zwei benachbarte Übergabestellen 72 werden durch ein Dichtelement 66 fluidisch getrennt. Ferner ist mit Bezug auf die Z-Achse radial innen von der radial inneren zweiten Übergabestelle 72 ein Dichtelement 66 vorgesehen. Zudem ist radial außen von der radial äußeren zweiten Übergabestelle 72 ein Dichtelement 66 vorgesehen. Das Dichtelement 66 kann in einer Dichtmittelausnehmung 68 an der Verteilscheibe 24 und/oder an der Grundplatte 12 vorgesehen sein.

Die zweiten Verteilkanalabschnitte 70b sind jeweils oberhalb des Durchmessers des ihnen zugeordneten ersten Verteilkanalabschnitts 70a angeordnet. Beispielhaft ist gemäß Fig. 10 so ein dritter Verteilkanalabschnitt 70c.1 mit einem ersten Verteilkanalabschnitt 70a.1 und ein weiterer dritter Verteilkanalabschnitt 70c.2 mit einem weiteren ersten Verteilkanalabschnitt 70a.2 fluidisch verbunden.

Gemäß Fig. 15 weist die Grundplatte 12 an die vierten Verteilkanalabschnitte 70d anschließende, vertikal verlaufende zweite Durchführungskanäle 74 auf. Die zweiten Durchführungskanäle 74 verbinden die Verteilscheibe 24 mit dem Spannadapter 18 fluidisch miteinander. Die zweiten Durchführungskanäle 74 schließen mit der Plattenoberseite 30 einen zweiten Winkel β zwischen 70° und 110°, insbesondere zwischen 80° und 100°, bevorzugt zwischen 85° und 95°, ein.

Die zweiten Durchführungskanäle 74 schließen an die Verteilkanäle 70 an, insbesondere an die vierten Verteilkanalabschnitte 70d, an und bilden eine dritte Übergabestelle 76. Zur Dichtung der dritten Übergabestelle 76 gegenüber der restlichen Spannstation 100 ist jeweils ein die dritte Übergabestelle 76 umgebendes Dichtelement 66, insbesondere Dichtring, vorgesehen. Das Dichtelement 66 kann in einer Dichtmittelausnehmung 68 an der Verteilscheibe 24 und/oder an der Grundplatte 12 vorgesehen sein.

Die zweiten Durchführungskanäle 74 münden in Adapterkanäle 78 des Spannadapters 18 und bilden eine vierte Übergabestelle 80. Zur Dichtung der vierten Übergabestelle 80 gegenüber der restlichen Spannstation 100 ist jeweils ein die vierte Übergabestelle 80 umgebendes Dichtelement 66, insbesondere Dichtring, vorgesehen. Das Dichtelement 66 kann in einer Dichtmittelausnehmung 68 am Spannadapter 18 und/oder an der Grundplatte 12 vorgesehen sein.

In Fig. 13, 15 und 16 sind die Adapterkanäle 78 gezeigt. Die Adapterkanäle 78 weisen einen vertikalen ersten Adapterkanalabschnitt 78a, einen horizontalen zweiten Adapterkanalabschnitt 78b und einen vertikalen dritten Adapterkanalabschnitt 78c, wobei der erste Adapterkanalabschnitt 78a und der dritte Adapterkanalabschnitt 78c oberseitig in den zweiten Adapterkanalabschnitt 78b mündet. Der zweite Adapterkanalabschnitt 78b kann durch eine gerade Bohrung oder durch wenigstens zwei aneinander anschließende Bohrungen im Spannadapter 18 gebildet werden. Die Bohrungen des zweiten Adapterkanalabschnitts 78b werden über die Adaptermantelseite 49 eingebracht und mit Verschlusselementen 60 an der Adaptermantelseite 49 verschlossen. Der erste Adapterkanalabschnitt 78a und der dritte Adapterkanalabschnitt 78c kann mittels einer Bohrung über die Adapteroberseite 46 in den Spannadapter 18 eingebracht werden.

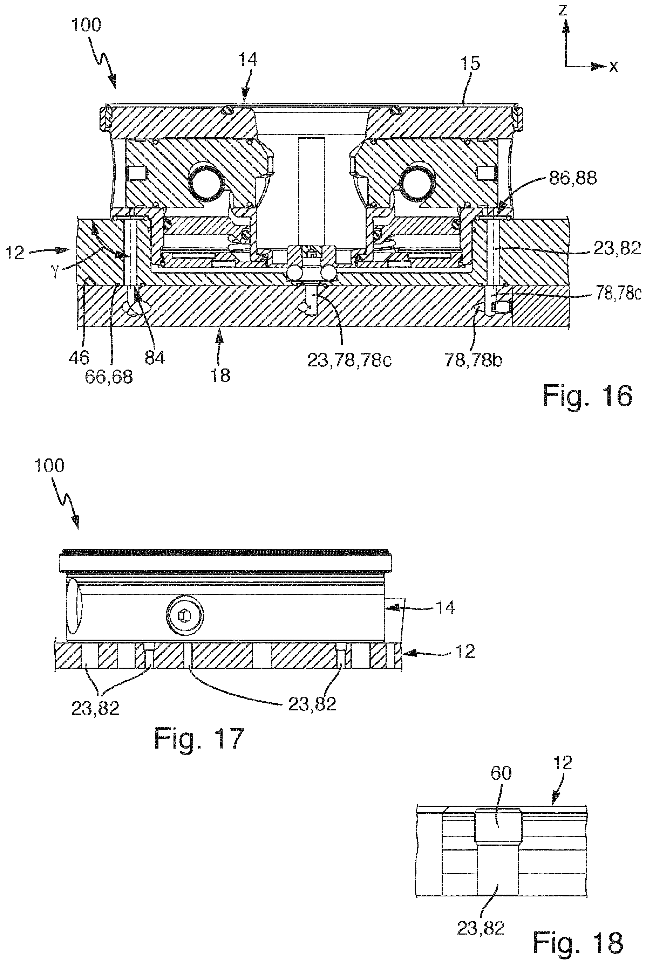

Der zweite Adapterkanalabschnitt 78b führt gemäß Fig. 16 und 17 zur Adapteroberseite 46 und bildet mit in der Grundplatte 12 vorgesehenen, vertikal verlaufenden dritten Durchführungskanälen 82 eine fünfte Übergabestelle 84. Zur Dichtung der fünften Übergabestelle 84 gegenüber der restlichen Spannstation 100 ist jeweils ein die fünfte Übergabestelle 84 umgebendes Dichtelement 66, insbesondere Dichtring, vorgesehen. Das Dichtelement 66 kann in einer Dichtmittelausnehmung 68 am Spannadapter 18 und/oder an der Grundplatte 12 vorgesehen sein. Die dritten Durchführungskanäle 82 schließen mit der Plattenoberseite 30 einen dritten Winkel γ zwischen 70° und 110°, insbesondere zwischen 80° und 100°, bevorzugt zwischen 85° und 95°, ein.

Die Adapterkanäle 78 sind mittels der dritten Durchführungskanäle 82 mit der Spannvorrichtung 14 fluidisch verbunden. Die dritten Durchführungskanäle 82 münden vorzugsweise an Medienzugängen 86 der Spannvorrichtung 14 und können so die Spannvorrichtungen 14 mit den am Medienanschluss 22 bereitgestellten Medien versorgen. Die Medienzugänge 86 und die dritten Durchführungskanäle 82 bilden jeweils eine sechste Übergabestelle 88, welche durch ein die sechste Übergabestelle 88 umgebendes Dichtelement 66, insbesondere Dichtring, gegenüber der Umgebung abgedichtet ist. Das Dichtelement 66 kann in einer Dichtmittelausnehmung 68 an der Spannvorrichtung 14 und/oder an der Grundplatte 12 vorgesehen sein.

Es können verschiedene Medien bzw. verschiedene Medienleitungen 23 am Medienanschluss 22 vorgesehen sein, wobei unterschiedliche Medienleitungen 23 unterschiedliche Funktionen mit sich bringen. Die Medienleitungen 23 sind derart ausgebildet, dass wenigstens eine der folgenden Funktionen realisiert werden können: Entriegeln der Spannvorrichtung 14, Verriegeln der Spannvorrichtung 14, Positionsabfrage des Spannmechanismus in der Spannvorrichtung 14, Ausblasluft und/oder Sperrluft an der Spannvorrichtung 14, Öffnen der Medienübergabe an der Spannvorrichtung 14, Schließen der Medienübergabe an der Spannvorrichtung 14.

Die ersten Durchführungskanäle 62, die zweiten Durchführungskanäle 74 und die dritten Durchführungskanäle 82 sind gemeinsam in Fig. 7 in der transparenten Darstellung der Grundplatte 12 ersichtlich.

Falls bei einem Aufbau eine Medienleitung 23 oder ein beschriebener Kanalabschnitt nicht erforderlich ist, kann dieser mit einem Verschlusselement 60 verschlossen werden. Vor dem Zusammenbau einer Spannstation 100 mit sich ändernden Spannvorrichtungen 14 sollte überprüft werden, welche Medienleitungen 23 zum Einsatz kommen. In Fig. 18 ist eine nicht verwendete, verschlossene Medienleitung 23 im Detail dargestellt.

Die Verteilscheibe 24 weist zusätzlich an dessen Scheibenoberseite 42 zwei weitere Kupplungselemente 88 zum Anschließen weiterer, nicht gezeigter Verbraucher auf, wobei die Kupplungselemente 88 ebenfalls mit den Medienleitungen 23 fluidisch verbunden sind. Demnach können neben den Spannvorrichtungen 14 auch weitere Verbraucher durch die Spannstation 100 mit Medien versorgt werden.

## Patentansprüche

1. Spannstation (100) mit jeweils eine Spannvorrichtung (14) umfassenden Spannbaugruppen (16) zum Spannen eines Bauteils, mit einer Grundplatte (12) zur Befestigung der Spannstation (100) an einer Bearbeitungsanlage, die Grundplatte (12) umfassend:
- Modulaufnahmen (34, 38) zur Aufnahme der Spannbaugruppen (16),
- wenigstens einen Medienanschluss (22) zur fluidischen Verbindung der Spannstation (100) mit einer anlagenseitigen Medienzuführung,
wobei der Medienanschluss (22) und die Spannbaugruppe (16) mittels Medienleitungen (23) fluidisch miteinander verbunden sind,
wobei die Medienleitungen (23) jeweils Verteilkanäle (70) umfassen,
wobei die Verteilkanäle (70) an oder in einer zur Grundplatte (12) separat ausgebildeten Verteilscheibe (24) angeordnet sind,
wobei die Medienleitungen (23) an oder in der Grundplatte (12) angeordnete erste Durchführungskanäle (62) umfasst, wobei der Medienanschluss (22) und die Verteilscheibe (24) mittels der ersten Durchführungskanäle (62) fluidisch verbunden sind.

2. Spannstation (100) nach Anspruch 1, wobei die Medienleitungen (23) an oder in der Grundplatte (12) angeordnete zweite Durchführungskanäle (74) umfasst, wobei die Verteilscheibe (24) und die Spannbaugruppe (16) mittels der zweiten Durchführungskanäle (74) fluidisch verbunden sind.

3. Spannstation (100) nach Anspruch 1 oder 2, ferner umfassend einen Maschinenadapter (20), wobei der Medienanschluss (22) am oder im Maschinenadapter (20) angeordnet ist.

4. Spannstation (100) nach einem der vorherigen Ansprüchen, wobei die Spannbaugruppe (16) jeweils neben der Spannvorrichtung (14) einen Spannadapter (18) aufweist.

5. Spannstation (100) nach Anspruch 4, wobei die Medienleitungen (23) ferner am oder im Spannadapter (18) angeordnete Adapterkanäle (78) umfassen, wobei die Verteilscheibe (24) und die Spannvorrichtung (14) jeweils mittels der Adapterkanäle (78) fluidisch verbunden sind.

6. Spannstation (100) nach Anspruch 4 oder 5, wobei die Medienleitungen (23) am oder in der Grundplatte (12) angeordnete dritte Durchführungskanäle (82) umfasst, wobei der Spannadapter (18) und die Spannvorrichtung (14) mittels der dritten Durchführungskanäle (82) fluidisch verbunden sind.

7. Spannstation (100) nach einem der vorherigen Ansprüche, wobei die Verteilkanäle (70) zumindest teilweise an einer Scheibenunterseite (44) der Verteilscheibe (24) angeordnet sind.

8. Spannstation (100) nach Anspruch 7, wobei die Verteilkanäle (70) zumindest teilweise durch eine Scheibenunterseite (44) der Verteilscheibe (24) und durch eine Plattenoberseite (30) der Grundplatte (12) begrenzt werden.

9. Spannstation (100) nach einem der vorherigen Ansprüche, wobei jeder Verteilkanal (70) jeweils einen zumindest teilweise entlang eines Rings verlaufenden ersten Verteilkanalabschnitt (70a) aufweist.

10. Spannstation (100) nach Anspruch 9, wobei jeder erste Verteilkanalabschnitt (70a) einen unterschiedlichen Verteildurchmesser (D3) aufweist.

11. Spannstation (100) nach Anspruch 9 oder 10, wobei zwischen zwei benachbarten ersten Verteilkanalabschnitten (70a) ein Dichtelement (66) zum fluidischen Trennen der benachbarten ersten Verteilkanalabschnitte (70a) angeordnet ist.

12. Spannstation (100) nach einem der vorherigen Ansprüche, wobei die Spannstation (100) derart ausgebildet ist, dass eine Scheibenoberseite (42) der Verteilscheibe (42) bündig oder tiefer als eine Spannoberseite (15) der Spannvorrichtung (14) angeordnet ist.

13. Grundplatte (12) für eine Spannstation (100)
mit einer Plattenoberseite (30) und einer der Plattenoberseite (30) gegenüberliegenden Plattenunterseite (32),
mit an oder in der Plattenoberseite (30) vorgesehenen Modulaufnahmen (34) zur Aufnahme von Spannvorrichtungen (14),
mit einer an oder in der Plattenoberseite (30) vorgesehenen Scheibenaufnahme (36) zur Aufnahme einer Verteilscheibe (24),
mit einem an oder in der Plattenunterseite (32) vorgesehenen Adapteraufnahme (38) zur Aufnahme eines Maschinenadapters (20),
mit im Wesentlichen senkrecht zur Plattenoberseite (30) verlaufenden ersten Durchführungskanälen (62) und zweiten Durchführungskanälen (74),
wobei die Adapteraufnahme (38) und die Scheibenaufnahme (36) mittels der ersten Durchführungskanäle (62) fluidisch verbunden sind, und
wobei die Scheibenaufnahme (36) und die Modulaufnahmen (34) jeweils mittels der zweiten Durchführungskanäle (72) fluidisch verbunden sind.

14. Verteilscheibe (24) für eine Spannstation (100) umfassend:
- eine Scheibenoberseite (42),
- eine der Scheibenoberseite (42) gegenüberliegende Scheibenunterseite (44),
- eine zwischen der Scheibenoberseite (42) und der Scheibenunterseite (44) angeordnete Scheibenmantelseite (43),
- Verteilkanäle (70) mit wenigstens einem ersten Verteilkanalabschnitt (70a) und mit wenigstens einem weiteren Verteilkanalabschnitt (70b, 70c, 70d), wobei der wenigstens eine erste Verteilkanalabschnitt (70a) an der Scheibenunterseite (44) vorgesehen und zumindest teilweise entlang eines Rings verlaufend angeordnet ist,
wobei der wenigstens eine weitere Verteilkanalabschnitt (70b, 70c, 70d) zwischen der Scheibenoberseite (42) und der Scheibenunterseite (44) angeordnet und senkrecht oder parallel zur Scheibenoberseite (42) verlaufend angeordnet ist.
